(19)

Europäisches
Patentamt
European
Patent Office
Office européen
des brevets

(11)  **EP 3 972 187 A1**

(12)  # EUROPEAN PATENT APPLICATION

(43) Date of publication:
**23.03.2022  Bulletin 2022/12**

(21) Application number: **21188372.3**

(22) Date of filing: **29.07.2021**

(51) International Patent Classification (IPC):
**H04L 9/00** *(2022.01)*  **H04L 9/06** *(2006.01)*
**H04L 9/32** *(2006.01)*

(52) Cooperative Patent Classification (CPC):
**H04L 9/0631; H04L 9/003; H04L 9/0637;
H04L 9/0662**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **17.09.2020  US 202017024107**

(71) Applicant: **INTEL Corporation
Santa Clara, CA 95054 (US)**

(72) Inventors:
• **Ghosh, Santosh
  Hillsboro, or Oregon 97124 (US)**
• **Vama, Avinash L.
  Chandler, az Arizona 85224 (US)**
• **Elbaum, Reuven
  3292207 Haifa HA (IL)**
• **Sastry, Manoj
  Portland, or Oregon 97229 (US)**

(74) Representative: **Goddar, Heinz J.
Boehmert & Boehmert
Anwaltspartnerschaft mbB
Pettenkoferstrasse 22
80336 München (DE)**

(54)  **PROTECTION OF AUTHENTICATION TAG COMPUTATION AGAINST POWER AND
ELECTROMAGNETIC SIDE-CHANNEL ATTACKS**

(57)    Protection of authentication tag computation against power and electromagnetic side-channel attacks is described. An example of one or more storage mediums includes instructions for performing a process for calculation of an authentication tag for a data encryption operation, including generating one or more random values; receiving multiple data blocks for calculation, and performing calculation utilizing the received data blocks and the one or more random values to generate intermediate values; performing a data accumulation operation to accumulate random values in calculation of the data blocks; and calculating the authentication tag based at least in part on the generated intermediate values and the accumulated random values.

MICROARCHITECTURE DPA PROTECTED GCM
TAG COMPUTATION

FIG. 4

For Each Block X:
$T_1 = (T_1 \,\hat{}\, (X \,\hat{}\, R)) * H$
$T_2 = (T_2 \,\hat{}\, R) * H$
\# Update R If Possible Using Transformation/LFSR
Return $T_1 \,\hat{}\, T_2$

R = random
$T_1$ = 0 (Masked Result)
$T_2$ = 0 (Current Mask)

EP 3 972 187 A1

Printed by Jouve, 75001 PARIS (FR)

**Description**

TECHNICAL FIELD

Embodiments described herein generally relate to the field of electronic devices and, more particularly, protection of authentication tag computation against power and electromagnetic side-channel attacks.

BACKGROUND

In cryptographic operations for computing systems, authentication tags are calculated for security, including, for example the authentication tag generated for AES-GCM (Advanced Encryption Standard-Galois Counter Mode) encryption operation. AES-GCM may be used to transfer sensitive data, with the generated authentication tag being required to decrypt the encrypted data.

A side-channel attack (SCA) is an attack based on leaked information in a computing system. A side-channel attack may be in the form of observation of power consumption, electromagnetic emissions, or other signal leakages from a circuit. In existing technology, a AES engine implemented for encryption operation may be DPA (Differential Power Analysis)-protected to provide protection of the engine from such side-channel attacks.

However, protection of the AES engine does not provide protection for computation of the authentication tag. If an attacker is able to determine the value of a secret authentication key through a side-channel attack, the attacker may be capable of applying the obtained authentication key in altering data or authentication tags, thus defeating the cryptographic operations.

BRIEF DESCRIPTION OF THE DRAWINGS

Embodiments described here are illustrated by way of example, and not by way of limitation, in the figures of the accompanying drawings in which like reference numerals refer to similar elements.

> **FIGS. 1A** and **1B** illustrate a one-time hash-based signatures scheme and a multi-time hash-based signatures scheme, respectively;
> **FIGS. 2A** and **2B** illustrate a one-time signature scheme and a multi-time signature scheme, respectively;
> **FIG. 3** is an illustration of a processing element including one or more countermeasures to prevent side-channel attacks, according to some embodiments;
> **FIG. 4** is an illustration of microarchitecture DPA protected GCM authentication tag computation, according to some embodiments;
> **FIG. 5** is a flow chart to illustrate multiplication countermeasures to address side-channel attacks on authentication tag computation, according to some embodiments;
> **FIG. 6** is a flow chart to illustrate data and register countermeasures to address side-channel attacks on authentication tag computation, according to some embodiments;
> **FIG. 7A** is a flow chart to illustrate implementation countermeasures to address side-channel attacks on authentication tag computation, according to some embodiments;
> **FIG. 7B** is a flow chart to illustrate a process for maintaining implementation countermeasures in circuit optimization, according to some embodiments; and
> **FIG. 8** illustrates an embodiment of an exemplary computing architecture for implementing countermeasures to protect authentication tag computation against power and electromagnetic side-channel attacks, according to some embodiments.

DETAILED DESCRIPTION

Embodiments described herein are directed to protection of authentication tag computation against power and electromagnetic side-channel attacks.

The Advanced Encryption Standard (AES) algorithm in Galois Counter Mode (GCM), known as AES-GCM, is an authentication encryption algorithm developed by the National Institute for Standard and Technology (NIST). AES-GCM is an authenticated encryption mode that uses the AES block cipher in counter mode with a polynomial MAC based on Galois field multiplication. The output of calculation in AES-GCM is a ciphertext C and an authentication tag AT, the authentication tag being necessary, together with other values (an initialization vector IV and additional authenticated data A), for successful authenticated decryption. The AES-GCM authentication technology may be utilized in numerous operations, including, for example, transfer among different dies in a computing package device.

The generation of the authentication tag utilizes a secret authentication key H. However, if the authentication key H can be determined by an attacker, the encryption of data may be compromised. In particular, the nonlinear multiplication operations in a system may be subject to a side channel attack in which leakage of electromagnetic or power signals in connection with the calculation of the authentication tag is utilized by an attacker in an attempt to determine the H value.

The authentication tag in AES-GCM is computed as follows:

$$\text{Authentication Tag (AT)} = ( \ldots ((A \times H) \wedge D_1) \times H) \ldots \wedge L) \times H) \wedge E_k(C_0)$$

In operation of a system utilizing AES-GCM, DPA (Differential Power Analysis) and DEMA (Differential Electromagnetic Analysis) attacks may made by exploiting power and electromagnetic (EM) side-channel leakages during multiplication to generate the authentication tag. If an attacker can determine the authentication key H value through a side-channel attack, the attacker then can alter data and the authentication tag.

Post-Quantum Cryptography

Post-Quantum Cryptography (also referred to as "quantum-proof', "quantum-safe", "quantum-resistant", or simply "PQC") takes a futuristic and realistic approach to cryptography. It prepares those responsible for cryptography as well as end-users to know the cryptography is outdated; rather, it needs to evolve to be able to successfully address the evolving computing devices into quantum computing and post-quantum computing.

It is well-understood that cryptography allows for protection of data that is communicated online between individuals and entities and stored using various networks. This communication of data can range from sending and receiving of emails, purchasing of goods or services online, accessing banking or other personal information using websites, etc.

Conventional cryptography and its typical factoring and calculating of difficult mathematical scenarios may not matter when dealing with quantum computing. These mathematical problems, such as discrete logarithm, integer factorization, and elliptic-curve discrete logarithm, etc., are not capable of withstanding an attack from a powerful quantum computer. Shor, P.W. "Algorithms for quantum computation: discrete logarithms and factoring". Proceedings 35th Annual Symposium on Foundations of Computer Science. IEEE Comput. Soc. Press. doi:10.1109/sfcs.1994.365700. ISBN 0818665807. Although any post-quantum cryptography could be built on the current cryptography, the novel approach would need to be intelligent, fast, and precise enough to resist and defeat any attacks by quantum computers.

Today's PQC is mostly focused on the following approaches: 1) hash-based cryptography based on Merkle's hash tree public-key signature system of 1979, which is built upon a one-message-signature idea of Lamport and Diffie; 2) code-based cryptography, such as McEliece's hidden-Goppa-code public-key encryption system; 3) lattice-based cryptography based on Hoffstein-Pipher-Silverman public-key-encryption system of 1998; 4) multivariate-quadratic equations cryptography based on Patarin's Hidden Field Equation (HFE) public-key-signature system of 1996 that is further based on the Matumoto-Imai proposal; 5) supersingular elliptical curve isogeny cryptography that relies on supersingular elliptic curves and supersingular isogeny graphs; and 6) symmetric key quantum resistance, such as HBS.

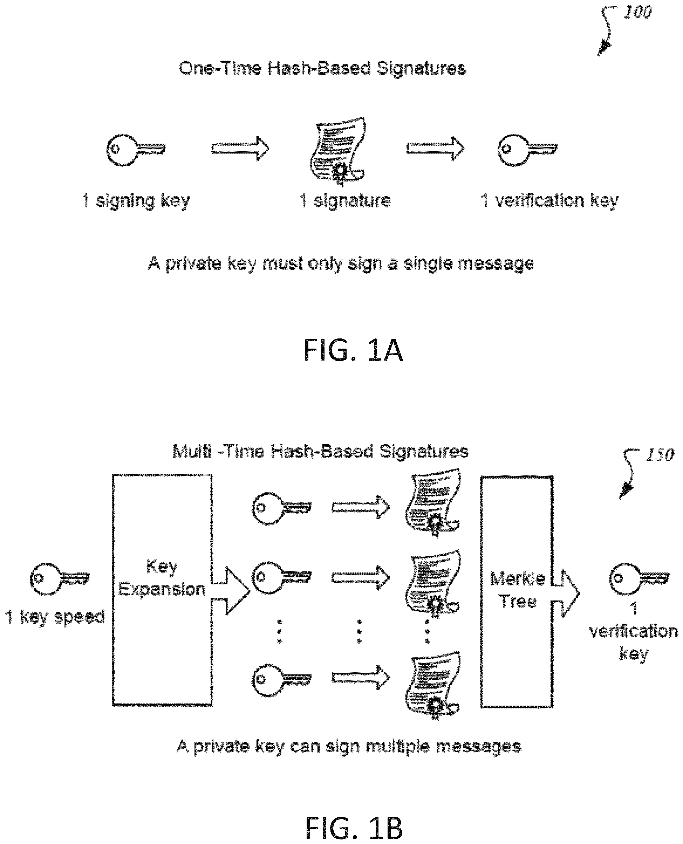

**FIGS. 1A** and **1B** illustrate a one-time hash-based signatures scheme and a multi-time hash-based signatures scheme, respectively. As aforesaid, hash-based cryptography is based on cryptographic systems like Lamport signatures, Merkle Signatures, extended Merkle signature scheme (XMSS), SPHINCS scheme, SPHINCS+ scheme, etc. With the advent of quantum computing and in anticipation of its growth, there have been concerns about various challenges that quantum computing could pose and what could be done to counter such challenges using the area of cryptography.

One area that is being explored to counter quantum computing challenges is hash-based signatures (HBS) since these schemes have been around for a long while and possess the necessary basic ingredients, such as relying on symmetric cryptography building blocks (e.g., hash functions), to counter the quantum counting and post-quantum computing challenges. HBS schemes are regarded as fast signature algorithms working with fast platform secured-boot, which is regarded as the most resistant to quantum attacks.

For example, as illustrated with respect to FIG. 1A, a scheme of HBS is shown that uses Merkle trees along with one-time signature (OTS) scheme 100, such as using a private key to sign a message and a corresponding public key to verify the OTS message, where a private key only signs a single message.

Similarly, as illustrated with respect to FIG. 1B, another HBS scheme is shown, where this one relates to multi-time signatures (MTS) scheme 150, where a private key can sign multiple messages.

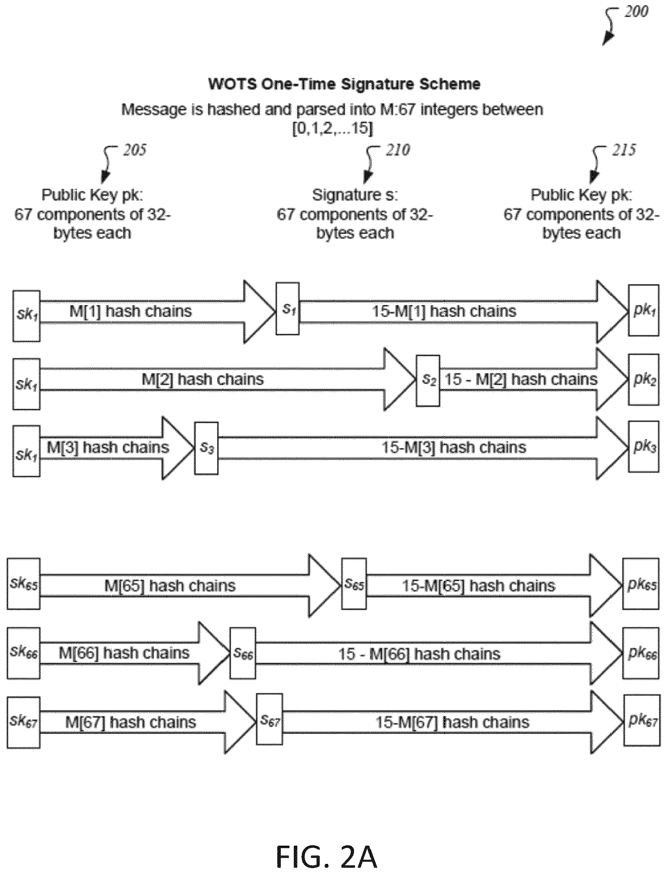

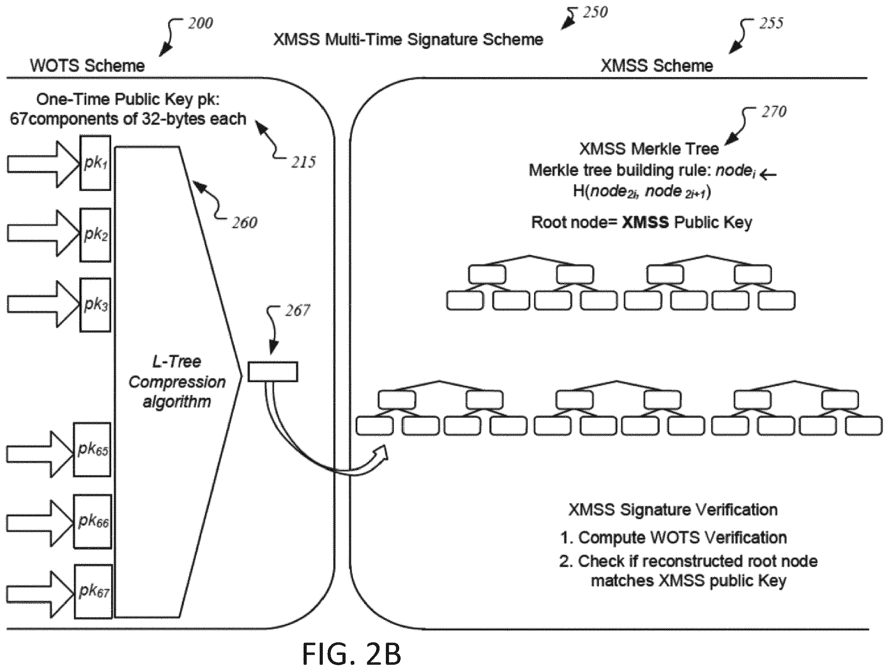

**FIGS. 2A** and **2B** illustrate a one-time signature scheme and a multi-time signature scheme, respectively. Continuing with HBS-based OTS scheme 100 of FIG. 1A and MTS scheme 150 of FIG. 1B, FIG. 2A illustrates Winternitz OTS (WOTS) scheme 200, which was offered by Robert Winternitz of Stanford Mathematics Department, while FIG. 2B illustrates XMSS MTS scheme 250, respectively.

For example, WOTS scheme 200 of FIG. 2A provides for hashing and parsing of messages into M, with 67 integers between [0, 1, 2, ... , 15], such as private key, *sk,* 205, signature, *s,* 210, and public key, *pk,* 215, with each having 67 components of 32 bytes each.

Now, for example, FIG. 2B illustrates XMSS MTS scheme 250 that allows for a combination of WOTS scheme 200 of FIG. 2A and XMSS scheme 255 having XMSS Merkle tree 270. As discussed previously with respect to FIG. 2A, WOTS scheme 200 is based on a one-time public key, pk, 215, having 67 components of 32 bytes each, that is then put through L-Tree compression algorithm 260 to offer WOTS compressed pk 267 to take a place in the XMSS Merkle tree 270 of XMSS scheme 255. It is contemplated that XMSS signature verification may include computing WOTS verification and checking to determine whether a reconstructed root node matches the XMSS public key, such as root node = XMSS public key.

Countermeasures for Side Channel Attacks on Authentication Tag Calculation

In some embodiments, an apparatus, system, or process provides for protection against DPA/DEMA attacks in the calculation of the authentication tag in an authentication encryption algorithm, and in particular in AES-GCM.

Power and EM leakages occur due to multiple different factors, the factors including at least algorithm leakage (multiplication), data dependent leakage (A, $D_i$'s, intermediate results) and implementation aspects. As used herein, A refers to an Additional Authenticated Data (AAD) value to provide additional integrity and authenticity check on the encrypted data, and $D_i$ refers to encrypted data values. The sources of these leakages are respectively the multiplier utilized in generation the authentication key, the registers to store values, and the wires in the device implementation.

In some embodiments, an apparatus, system, or process includes one or more of the following countermeasures to protect against side channel attacks in relation to the calculation of the authentication tag:

(1) Multiplication leakages may be reduced or prevented through input data (A, $D_i$'s) randomizations. In some embodiments, each data is randomized with new random values that are generated locally to avoid latency overhead.

(2) Leakages due to register updates may be reduced or prevented through the storage of the randomized intermediate results in the registers.

(3) (a) Implementation specific leakages may be reduced or prevented by providing multiplexing between multiple sources for driving sensitive intermediate nodes, and thus avoid exposing actual intermediate results in calculation. An embodiment may include, but is not limited to, the inclusion of multiplexers (MUXs) in device generation. In some embodiments, each random number added with input data (A, $D_i$'s) is multiplied by H and accumulated in another register that is exclusive ORed (XORed) with the randomized intermediate result only at the end of tag computation through operation of multiplexers that should be maintained in hardware optimization.

(b) The implementation of an apparatus or system to calculate the authentication tag may include optimization of the circuit, including the potential elimination of the multiplexing of intermediate results. In some embodiments, one or more protection operations are provided to prevent the elimination of such multiplexing during the optimization of the circuit.

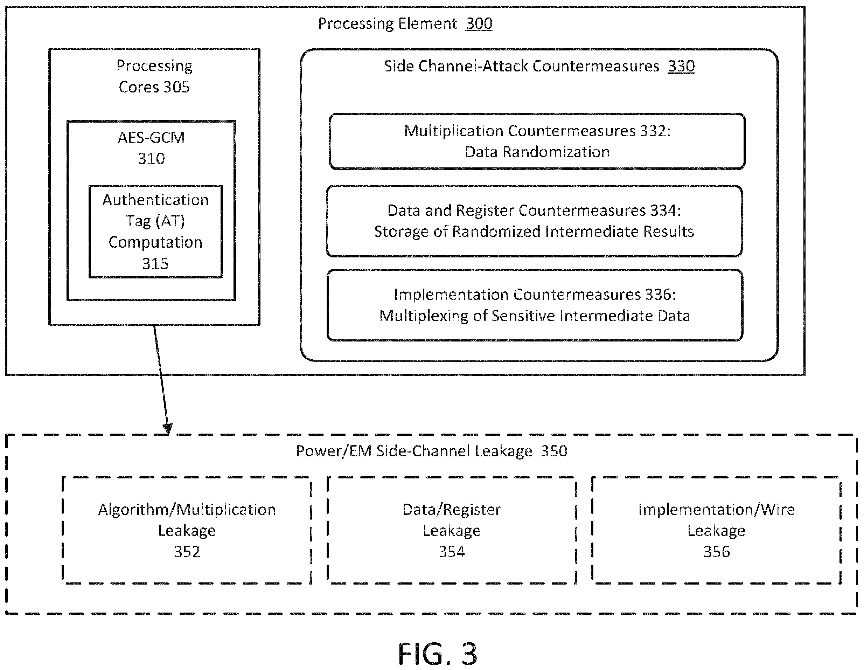

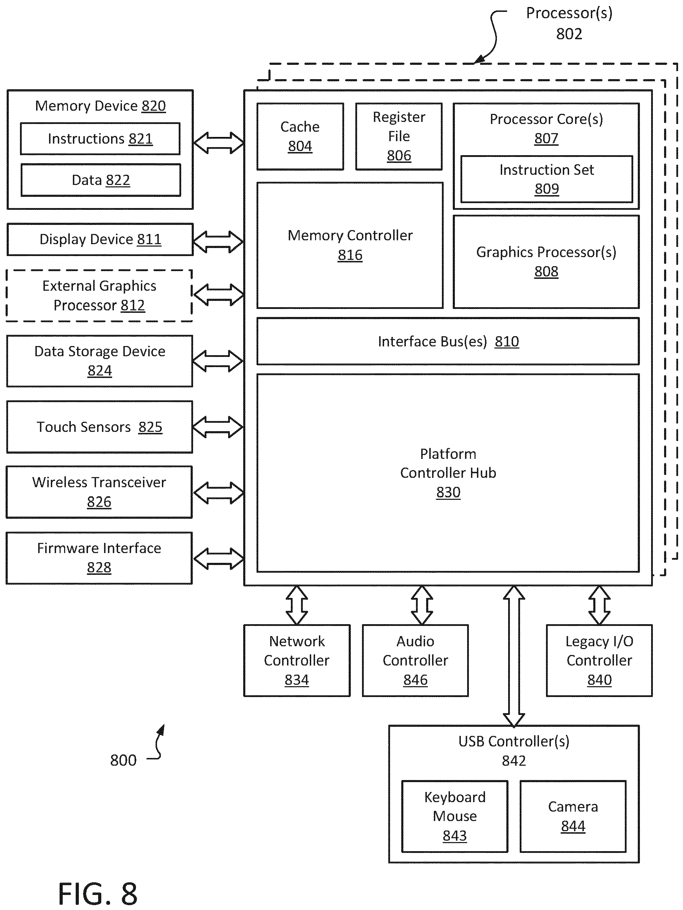

FIG. 3 is an illustration of a processing element including one or more countermeasures to prevent side-channel attacks, according to some embodiments. As illustrated, a processing element 300, such as a processor of the one or more processors 802 illustrated in FIG. 8, includes one or more processing cores 305. The processing cores 305 include encryption operation utilizing AES-GCM technology 310, which includes authentication tag (AT) computation 315. In some embodiments, the processing element 300 may be included in a package with multiple dies, wherein a link between dies may require a secret key to authenticate transfers because of the potential exposure of the inter-die link to an attacker.

However, the operation of the processing element 300 may allow access to power and EM side-channel leakage 350, which may thus allow for an attacker to determine the authentication key H utilized in the authentication tag calculation 315, and thus potentially modify data and authentication tag values.

More specifically, the power and EM side-channel leakage 350 may include algorithm/multiplication leakage 352 in the calculation of the authentication tag; data/register leakage 354 in connection with the storing values in registers in the calculation; and implementation/wire leakage in which the implementation of calculation allows for detection of values in calculation.

In some embodiments, an apparatus, system, or process includes one or more side channel attack countermeasure technologies 330 to repel the power and EM side channel attacks on the operation of the processing element 300, wherein the countermeasures may include:

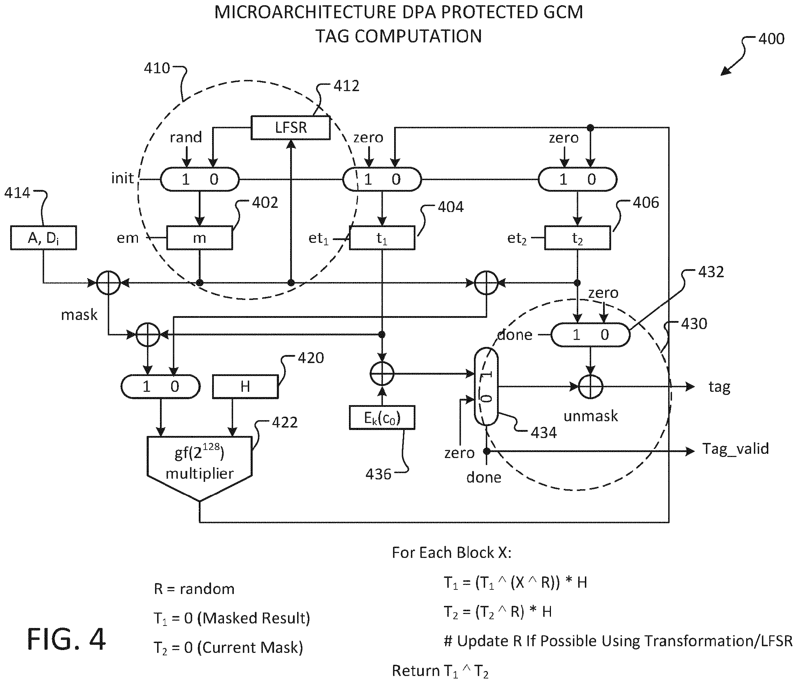

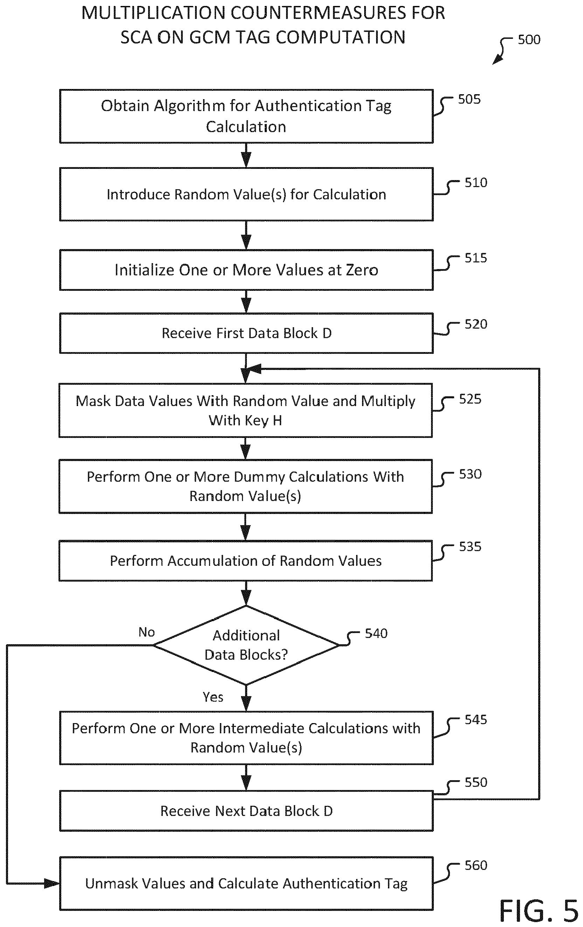

(1) Multiplication countermeasures 332 in which data randomization is introduced. The multiplication countermeasures are further illustrated in FIGS. 4 and 5.

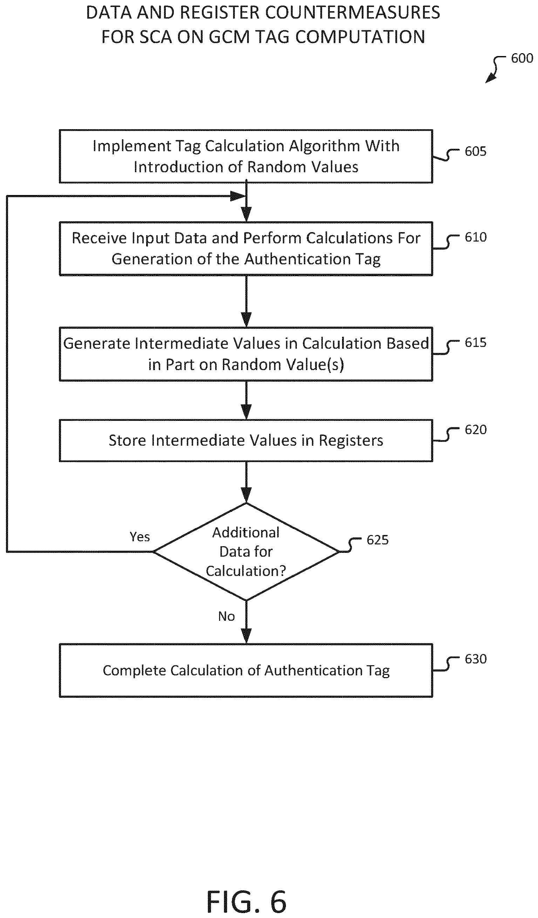

(2) Data and register countermeasures 334 in which randomized intermediate results are stored in the registers. The data and register countermeasures are further illustrated in FIGS. 4 and 6.

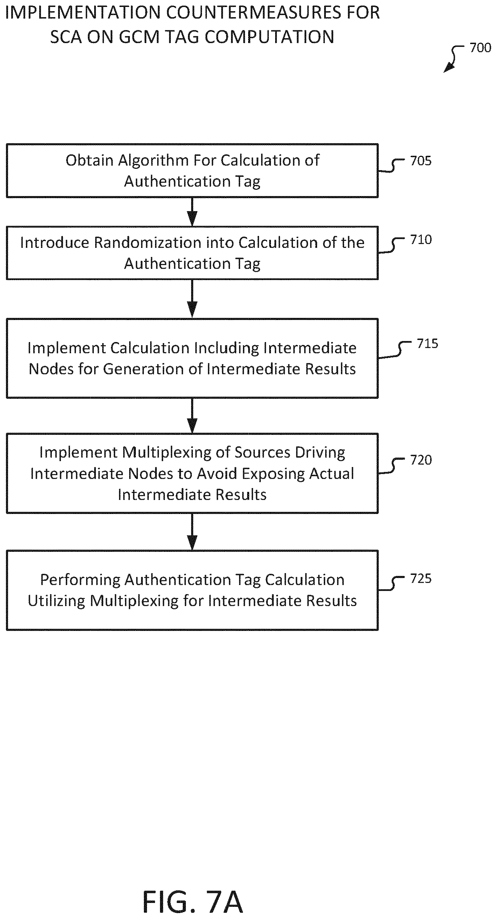

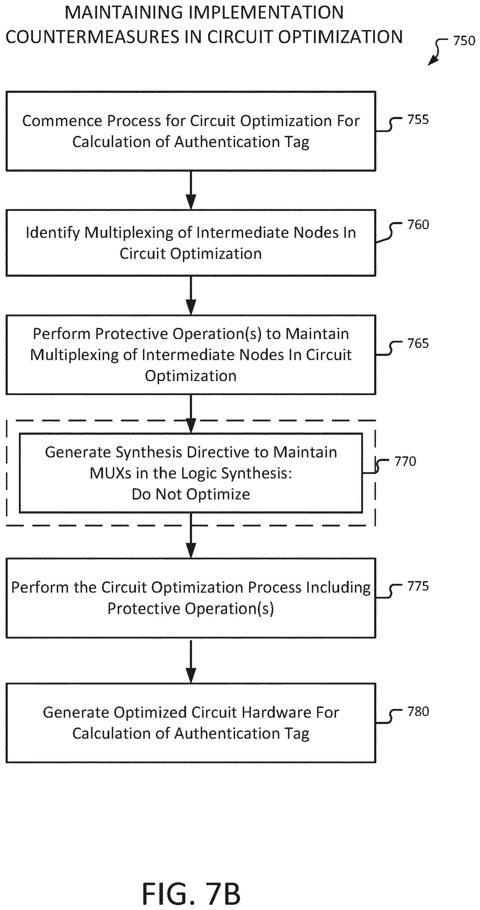

(3) Implementation countermeasures 336 in which multiplexing of sources driving sensitive intermediate nodes is provided to avoid exposing actual intermediate results in calculation. Embodiments may include the implementation of multiplexer elements in an apparatus or system to provide the multiplexing of sources. In some embodiments, the countermeasures further include one or more operations to maintain the multiplexing for intermediate nodes during circuit optimization. For example, a synthesis tool may be directed to maintain multiplexing in device generation (for example, a directive not to optimize multiplexers within a circuit) to avoid the elimination of the protection provided by the multiplexing as this could result in exposing actual intermediate results in calculation. The implementation countermeasures are further illustrated in FIGS. 4, 7A, and 7B.

**FIG. 4** is an illustration of microarchitecture DPA protected GCM authentication tag computation, according to some embodiments. As illustrated in FIG. 4, data randomization is introduced in a first embodiment for generation of an authentication tag 400 to reduce or prevent algorithm leakage in the computation process. In particular, the computation includes initial processing 410 to introduce randomization of data into the calculation of the authentication tag, and final processing 430 to remove the randomization of data and generate the final authentication tag.

As illustrated in Fig. 4, registers include register m (402), register $t_1$ (404), and register $t_2$ (406). In such an implementation, rather than having a single result register, the operation thus includes two result registers, with register $t_1$ providing for storage of a randomized result, and register $t_2$ for accumulated random numbers, wherein the randomized portion of the results may be removed at the end of processing. In some embodiments, a process includes initializing the register m by a random value, such as a 128-bit random number (rand) that is not accessible to an adversary. Additionally, for correct functionality, registers $t_1$ and $t_2$ are initialized to zero. The authentication key 420 for calculation is indicated as H. Multiplication is provided utilizing a Galois field gf ($2^{128}$) multiplier 422.

In some embodiments, the following sequence of operations are provided for an input block Di (from input block 414):

1: Clock i : $t_{1,i+1} = ((D_i$ ^ $m_i)$ ^ $t_{1,i}) \times H$
2: Clock i+1: lfsr($m_i$) $\times$ H
3: Clock i+2: $t_{2,i+1} = (m_i$ ^ $t_{2,i}) \times H$.

In Operation 1, Di represents the current 128-bit input data block (either Additional Authentication Data (A) or Ciphertext Data (D)); $m_i$ represents the current 128-bit random number; $t_{1,i}$ represents the current state of the $t_1$ register, which is initialized by zero before starting a new AES-GCM operation; and H stands for the 128-bit authentication key. The value in register m in this clock cycle remain unchanged.

In Operation 2, one or more dummy operations may be provided, wherein a dummy operation may be any operation utilizing the multiplier 422 that is not necessary for the AES-GCM calculation of the authentication tag. For example, the dummy operation may include applying the current lfsr (linear feedback shift register) output with input of $m_i$, which is multiplied with H. This calculation provides the dummy operation between processing the randomized data at Operation 1 and accumulating the random number at Operation 3. The value of register m is unchanged in this cycle.

However, the inclusion of a dummy operation is not required in all embodiments. Other embodiments may provide one or more operations that allow for protection of calculation values utilizing other randomization. For example, the AES-GCM hardware may support multiple authentication tag calculation simultaneously, using multiple sets of registers $t_1$, $t_2$. In an embodiment, different calculations may be interleaved randomly, thus eliminating the need for dummy operations.

In Operation 3, the current value of register m ($m_i$) is reused, with such value XORed with the current value of the random accumulator register $t_2$ ($t_{2,i}$), with the XORed result being multiplied with H, and thus updating $t_2$. However, it is noted that between Operation 1 and Operation 3 there is a hamming weight that corresponds to the value of the secret authentication key H. In some embodiments, Operation 2 is provided to remove any observable correlation (e.g., a hamming distance) between Operations 1 and 3 that may otherwise be obtained by measuring power/EM leakage for these operations.

In some embodiments, the above three operations (Operations 1, 2, and 3) are computed in 3 consecutive cycles following the availability of Di. After completion of Operation 3, the process includes updating the pseudo-random generator state/register m in each following cycle until the next data block arrives. In a round-based AES engine, it can be expected that the next data block will be available after 7 cycles (for AES128) or 11 cycles (for AES256) after Operation 3. These intermediate cycles that provide for updating register m ensure that the random number ($m_{i+1}$) that will be used for the next data $D_{i+1}$ is different from the previously used $m_i$'s.

In some embodiments, the following operations are provided for processing the next data value $D_{i+1}$ at clock j:

4: Clock j: $t_{1,i+2} = ((D_{i+1}$ ^ $m_{i+1})$ ^ $t_{1,i+1}) \times H$
5: Clock j+1: lfsr($m_{i+1}$) $\times$ H

6: Clock j+1: $t_{2,i+2} = (m_{i+1} \wedge t_{2,i+1}) \times H$.

In some embodiments, the above procedures are continued for all data blocks followed by a single block of length information. For generating the final GCM authentication tag, the encrypted value of the first counter value $E_k(c_0)$ 436 from the AES engine is XORed with $t_1$ followed by XORing with $t_2$, as follows:

7: tag = $E_k(c_0) \wedge t_1 \wedge t_2$.

In some embodiments, Operation 7 is performed only after processing all data blocks and the length block. In other words, this operation is performed only at the time for generating the final authentication tag value, when the $E_k(c_0)$ value is available to the DPA protected GCM tag computation unit provided in FIG. 4. To achieve this, multiplexing to implemented to multiplexing of sources driving sensitive intermediate nodes is provided to avoid exposing actual intermediate results in calculation. In an example, two multiplexers (MUX 432 and MUX 434 in FIG. 4) may be provided to pass zeros as the default outputs to the final XOR gate (unmask), and pass the correct results of $E_k(c_0) \wedge t_1$ and the value of the $t_2$ register 406 only at the time of final tag generation.

For the hardware implementation of the authentication tag calculation as illustrated in FIG. 4, a operation may be applied to optimize the circuit design, which may potentially remove the multiplexing that is provided to protect intermediate results from detection. For example, a modern synthesis tool might be applied to optimize the logic, and thus potentially remove the MUXs 432 and 434 in the process for generating an optimized netlist. In some embodiments, one or more operations are provided to prevent optimization from removing the multiplexing for intermediate node results during circuit optimization. In one example, a synthesis directive is provided (e.g., "do not optimize") for the circuit MUXs such that these MUXs are maintained in the synthesized hardware. In this manner, multiplexing is provided to assist in preventing implementation specific leakages (such as implementation/wire leakages 356 illustrated in FIG. 3) resulting from the calculation of the authentication tag.

In some embodiments, a Linear Feedback Shift Register (LFSR) 412 is utilized (as illustrated in FIG. 4) as a pseudo-random number generator (PRNG) for generating the pseudo-random numbers starting from a random 128-bit seed, as illustrated in FIG. 4. However, this is not required in all embodiments, and other embodiments may include any other PRNG technique for generating mi values.

The first embodiment for generation of an authentication tag 400 illustrated FIG. 4 is based on two random values. In some embodiments, a second alternative embodiment for generation of an authentication tag (not included in the illustration provide in FIG. 4) is implemented based on more than 2 shares, thus enabling additional protection against high-order DPA. In an operation in which 3 share are utilized, the values for the alternative embodiment may include:

$$R_1 = \mathrm{random}$$

$$R_2 = \mathrm{random}$$

$$R_3 = R_1 \wedge R_2$$

$$T_1 = T_2 = T_3 = 0$$

For each 128-bit data block D for the alternative embodiment, the following operations are provided in the calculation of the authentication tag:

a:

$$T_1 = (T_1 \wedge D \wedge R_1) \times H$$

b:

$$T_2 = (T_2 \wedge R_2) \times H$$

c:

$$T_3 = (T_3 \wedge R_3) \times H$$

d:

$$R_1 = lfsr_1(R_1)$$

e:

$$R_2 = lfsr_2(R_2)$$

f:

$$R_3 = R_1 \wedge R_2$$

In some embodiments, Operations a, b and c are executed in consecutive cycles, followed by Operations d, e and f being executed in a single cycle.

In some embodiments, for processing of each data block D, the execution order of Operations a, b and c can be randomized, thereby providing further protection from power and EM side-channel leakage in the calculation of the authentication tag value.

**FIG. 5** is a flow chart to illustrate multiplication countermeasures to address side-channel attacks on authentication tag computation, according to some embodiments. A process 500 includes obtaining an algorithm for calculation of an authentication tag 505. In some embodiments, one or more random values are introduced into the calculation process 510, wherein the one or more random values may include locally generated pseudo-random values that are not available to an outside attacker. The generation of the random values may include a linear feedback shift register (LFSR), such as LFSR 412 in FIG. 4, or other pseudo-random number generator. In some embodiments, the process 500 may further include initializing one or more values at zero in the calculation 515, such as provided for values $t_1$ and $t_2$ in the embodiment for generation of an authentication tag illustrated in FIG. 4.

In some embodiments, a first data block D is received 520, and the data is masked, utilizing one or more random values, and is multiplied with the authentication key H 525. One or more dummy calculations are then performed with one or more random values 530 (thereby removing observable correlation between actual calculation operations), followed by performing accumulation of the generated random values 535.

If there are additional data blocks for calculation 540, then one or more intermediate calculations may be performed with random values 545 during remaining clock cycles, followed by receiving the next data block D 550. The process then proceeds with masking the received data block utilizing one or more random values, and multiplying by the authentication key H 525.

If there are no additional data blocks for calculation 540, then the process proceeds with unmasking the values and calculating the final authentication tag 560.

**FIG. 6** is a flow chart to illustrate data and register countermeasures to address side-channel attacks on authentication tag computation, according to some embodiments. In some embodiments, a process 600 includes implementing a tag calculation algorithm with introduction of random values 605, such as illustrated in FIG. 4. The process proceeds with receiving input data and performing calculations for the generation of the authentication tag 610. In such algorithm, in addition to calculations that related to the generation of the authentication tag, there are calculations that include generating intermediate values that are based at least in part on one or more random values 615. The intermediate values may include values based at least in part an output of a pseudo-random number generator, such as LFSR 412.

In some embodiments, the process 600 includes storing the intermediate values in registers 620, such as register m 402, register $t_1$ 404, and register $t_2$ 406 in FIG. 4. The storing of such intermediate values in the registers assisting in reducing or preventing an attacker from determining actual data values utilizing power and EM side-channel attacks due to the operations to save random value-based intermediate values in the registers.

If there is additional data for calculations 625 to be performed in the generation of the authentication tag, the process continues with receiving additional data and the performance of calculation 610, generation of intermediate values based at least in part on one or more random values 615, and storing of intermediate values in registers 620. If there is no addition data for calculation 625, then the process includes completing calculation of the authentication tag 630, such as provided in FIG. 4.

**FIG. 7A** is a flow chart to illustrate implementation countermeasures to address side-channel attacks on authentication tag computation, according to some embodiments. In some embodiments, a process 700 includes obtaining an algorithm for calculation of an authentication tag 705, when the calculation includes the receipt of input data blocks D and the application of an authentication key H. In some embodiments, randomization is introduced into the calculation of the authentication tag 710, such as in either the first embodiment for generation of an authentication tag, illustrated in FIG. 4, or the second alternative embodiment for generation of an authentication tag, as described above. The process including implementing calculation including intermediate nodes for generation of intermediate results in the generation of the authentication tag 715.

In some embodiments, in order to combat side-channel attack based on the circuit implementation, the process includes implementing multiplexing of the sources driving the intermediate nodes to avoid exposing the actual intermediate results 720. In a particular example, as illustrated in FIG. 4, one or more multiplexers may be implemented to pass zeroes as default values and pass results for the final calculation of the authentication tag, such as including, but not limited to, MUXs 432 and 434 in FIG. 4. The calculation of an authentication tag may then be performed including utilizing the multiplexing implemented for the intermediate results 725.

**FIG. 7B** is a flow chart to illustrate a process for maintaining implementation countermeasures in circuit optimization, according to some embodiments. Upon multiplexing of intermediate results being established as provided in FIG. 7A, the resulting circuit may be subject to circuit optimization, such as utilizing a circuit synthesis tool. While the circuit optimization serves to improve circuit structure and efficiency, there is a risk that the optimization will result in removal of the desired multiplexing, such as in eliminating one or more multiplexers within the circuit, and thus potentially allowing an attacker to determine actual intermediate results in operation through a side-channel attack.

In some embodiments, a process 750 includes commencing a process for optimization of a circuit for calculation of an authentication tag 755. As an example, this may include optimizing a circuit design for the calculation illustrated in FIG. 4 In some embodiments, the process may include identifying multiplexing of sources of intermediate nodes that are provided to protect actual intermediate results from detection 760, and performing one or more protective operations to maintain the needed multiplexing for intermediate nodes during the circuit optimization 765.

For example, the process 750 may include a synthesis directive to maintain multiplexers in the logic synthesis 770. Such directive may be in the form of a "Do Not Optimize" command in relation to the one or more multiplexers.

The process 750 then provides for performing the circuit optimization process including the one or more protective operations 775. For example, the optimization process may include synthesizing the hardware for the authentication tag calculation, the synthesis including optimization of the netlist for the circuit while retaining the one or more multiplexers to provide implementation countermeasures to prevent side-channel attack on the resulting circuit.

In some embodiments, the optimized circuit hardware may then be generated based on the synthesis result 780, and ultimately performing authentication tag calculation utilizing the generated hardware.

**FIG. 8** illustrates an embodiment of an exemplary computing architecture for implementing countermeasures to protect authentication tag computation against power and electromagnetic side-channel attacks, according to some embodiments. In various embodiments as described above, a computing architecture 800 may comprise or be implemented as part of an electronic device. In some embodiments, the computing architecture 800 may be representative, for example, of a computer system that implements one or more components of the operating environments described above. In some embodiments, computing architecture 800 may be representative of one or more portions or components of a Deep Neural Network (DNN) training system that implement one or more techniques described herein. The embodiments are not limited in this context.

As used in this application, the terms "system" and "component" and "module" are intended to refer to a computer-related entity, either hardware, a combination of hardware and software, software, or software in execution, examples of which are provided by the exemplary computing architecture 800. For example, a component can be, but is not limited to being, a process running on a processor, a processor, a hard disk drive or solid state drive (SSD), multiple storage drives (of optical and/or magnetic storage medium), an object, an executable, a thread of execution, a program, and/or a computer. By way of illustration, both an application running on a server and the server can be a component. One or more components can reside within a process and/or thread of execution, and a component can be localized on one computer and/or distributed between two or more computers. Further, components may be communicatively coupled to each other by various types of communications media to coordinate operations. The coordination may involve the unidirectional or bi-directional exchange of information. For instance, the components may communicate information in the form of signals communicated over the communications media. The information can be implemented as signals allocated to various signal lines. In such allocations, each message is a signal. Further embodiments, however, may alternatively employ data messages. Such data messages may be sent across various connections. Exemplary connections include parallel interfaces, serial interfaces, and bus interfaces.

The computing architecture 800 includes various common computing elements, such as one or more processors, multi-core processors, co-processors, memory units, chipsets, controllers, peripherals, interfaces, oscillators, timing devices, video cards, audio cards, multimedia input/output (I/O) components, power supplies, and so forth. The embodiments, however, are not limited to implementation by the computing architecture 800. In some embodiments, the computing elements are to provide for countermeasures against DPA/DEMA side-channel attacks in the calculation of the authentication tag in an authentication encryption algorithm.

As shown in FIG. 8, the computing architecture 800 includes one or more processors 802 and one or more graphics processors 808, and may be a single processor desktop system, a multiprocessor workstation system, or a server system having a large number of processors 802 or processor cores 807. In one embodiment, the system 800 is a processing platform incorporated within a system-on-a-chip (SoC or SOC) integrated circuit for use in mobile, handheld, or embedded devices.

An embodiment of system 800 can include, or be incorporated within, a server-based gaming platform, a game console, including a game and media console, a mobile gaming console, a handheld game console, or an online game console. In some embodiments system 800 is a mobile phone, smart phone, tablet computing device or mobile Internet device. Data processing system 800 can also include, couple with, or be integrated within a wearable device, such as a smart watch wearable device, smart eyewear device, augmented reality device, or virtual reality device. In some embodiments, data processing system 800 is a television or set top box device having one or more processors 802 and a graphical interface generated by one or more graphics processors 808.

In some embodiments, the one or more processors 802 each include one or more processor cores 807 to process instructions which, when executed, perform operations for system and user software. In some embodiments, each of the one or more processor cores 807 is configured to process a specific instruction set 809. In some embodiments, instruction set 809 may facilitate Complex Instruction Set Computing (CISC), Reduced Instruction Set Computing (RISC), or computing via a Very Long Instruction Word (VLIW). Multiple processor cores 807 may each process a different instruction set 809, which may include instructions to facilitate the emulation of other instruction sets. Processor core 807 may also include other processing devices, such a Digital Signal Processor (DSP).

In some embodiments, the processor 802 includes cache memory 804. Depending on the architecture, the processor 802 can have a single internal cache or multiple levels of internal cache. In some embodiments, the cache memory 804 is shared among various components of the processor 802. In some embodiments, the processor 802 also uses an external cache (e.g., a Level-3 (L3) cache or Last Level Cache (LLC)) (not shown), which may be shared among processor cores 807 using known cache coherency techniques. A register file 806 is additionally included in processor 802 which may include different types of registers for storing different types of data (e.g., integer registers, floating point registers, status registers, and an instruction pointer register). Some registers may be general-purpose registers, while other registers may be specific to the design of the processor 802.

In some embodiments, one or more processor(s) 802 are coupled with one or more interface bus(es) 810 to transmit communication signals such as address, data, or control signals between processor 802 and other components in the system. The interface bus 810, in one embodiment, can be a processor bus, such as a version of the Direct Media Interface (DMI) bus. However, processor buses are not limited to the DMI bus, and may include one or more Peripheral Component Interconnect buses (e.g., PCI, PCI Express), memory buses, or other types of interface buses. In one embodiment the processor(s) 802 include an integrated memory controller 816 and a platform controller hub 830. The memory controller 816 facilitates communication between a memory device and other components of the system 800, while the platform controller hub (PCH) 830 provides connections to I/O devices via a local I/O bus.

Memory device 820 can be a dynamic random-access memory (DRAM) device, a static random-access memory (SRAM) device, flash memory device, phase-change memory device, or some other memory device having suitable performance to serve as process memory. In one embodiment the memory device 820 can operate as system memory for the system 800, to store data 822 and instructions 821 for use when the one or more processors 802 execute an application or process. Memory controller hub 816 also couples with an optional external graphics processor 812, which may communicate with the one or more graphics processors 808 in processors 802 to perform graphics and media operations. In some embodiments a display device 811 can connect to the processor(s) 802. The display device 811 can be one or more of an internal display device, as in a mobile electronic device or a laptop device, or an external display device attached via a display interface (e.g., DisplayPort, etc.). In one embodiment the display device 811 can be a head mounted display (HMD) such as a stereoscopic display device for use in virtual reality (VR) applications or augmented reality (AR) applications.

In some embodiments the platform controller hub 830 enables peripherals to connect to memory device 820 and processor 802 via a high-speed I/O bus. The I/O peripherals include, but are not limited to, an audio controller 846, a network controller 834, a firmware interface 828, a wireless transceiver 826, touch sensors 825, a data storage device 824 (e.g., hard disk drive, flash memory, etc.). The data storage device 824 can connect via a storage interface (e.g., SATA) or via a peripheral bus, such as a Peripheral Component Interconnect bus (e.g., PCI, PCI Express). The touch sensors 825 can include touch screen sensors, pressure sensors, or fingerprint sensors. The wireless transceiver 826 can be a Wi-Fi transceiver, a Bluetooth transceiver, or a mobile network transceiver such as a 3G, 4G, Long Term Evolution (LTE), or 5G transceiver. The firmware interface 828 enables communication with system firmware, and can be, for example, a unified extensible firmware interface (UEFI). The network controller 834 can enable a network connection to a wired network. In some embodiments, a high-performance network controller (not shown) couples with the interface bus 810. The audio controller 846, in one embodiment, is a multi-channel high definition audio controller. In one embodiment the system 800 includes an optional legacy I/O controller 840 for coupling legacy (e.g., Personal System 2 (PS/2)) devices to the system. The platform controller hub 830 can also connect to one or more Universal Serial Bus (USB) controllers 842 connect input devices, such as keyboard and mouse 843 combinations, a camera 844, or other USB input devices.

In some embodiments, one or more non-transitory computer-readable storage mediums having stored thereon executable computer program instructions that, when executed by one or more processors, cause the one or more processors to perform operations comprising performing a process for calculation of an authentication tag for a data encryption operation, including generating one or more random values utilizing a pseudo-random number generator; receiving a plurality of data blocks for calculation, and performing calculation utilizing the received plurality of data blocks and the one or more random values to generate intermediate values; performing a data accumulation operation to accumulate random values in calculation of the data blocks; and calculating the authentication tag based at least in part on the generated intermediate values and the accumulated random values.

In some embodiments, calculating the authentication tag is further based on a received counter value.

In some embodiments, calculation of the authentication tag is performed after processing of all of the plurality of data blocks.

In some embodiments, the instructions further include instructions for performing one or more dummy operations between processing of a data block of the plurality of data blocks and performing the data accumulation operation for a random value.

In some embodiments, the instructions further include instructions for storing the intermediate values in a first register and storing the accumulated random values in a second register.

In some embodiments, the instructions further include instructions for multiplexing between multiple sources in providing the intermediate values for calculation of the authentication tag.

In some embodiments, the instructions further include instructions for performing optimization of the calculation of the authentication tag, including performing one or more protective operations to maintain the multiplexing between multiple sources in providing the intermediate values.

In some embodiments, the multiplexing includes implementation of one or more multiplexers that are utilized in calculating a final value for the authentication tag.

In some embodiments, the data encryption operation is an AES-GCM (Advanced Encryption Standard-Galois Counter Mode) encryption operation.

In some embodiments, a system includes one or more processors including one or more processing cores, the one or more processor to calculate an authentication tag for a data encryption operation; and a memory for storage of data, including data for one or more secure operations, wherein the one or more processors are to generate one or more random values utilizing a pseudo-random number generator; receive a plurality of data blocks for calculation, and perform calculation utilizing the received plurality of data blocks and the one or more random values to generate intermediate values; perform a data accumulation operation to accumulate random values in calculation of the data blocks; and calculate the authentication tag based at least in part on the generated intermediate values and the accumulated random values.

In some embodiments, calculating the authentication tag is further based on a received counter value; and calculation of the authentication tag is performed after processing of all of the plurality of data blocks.

In some embodiments, the one or more processors are further to upon processing a data block, update a state or value for the pseudo-random number generator during one or more clock cycles prior to receiving a next data block.

In some embodiments, the system further includes a plurality of registers including at least a first register and a second register, wherein the one or more processors are further to store the intermediate values in the first register and store the accumulated random values in the second register.

In some embodiments, the system further includes one or more multiplexers to multiplex between multiple sources in providing the intermediate values for calculation of the authentication tag.

In some embodiments, the one or more multiplexers are utilized in calculating a final value for the authentication tag.

In some embodiments, the data encryption operation is an AES-GCM (Advanced Encryption Standard-Galois Counter Mode) encryption operation.

In some embodiments, a method for calculation of an authentication tag for an AES-GCM (Advanced Encryption Standard-Galois Counter Mode) data encryption operation, including generating one or more random values utilizing a pseudo-random number generator; receiving a plurality of data blocks for calculation, and performing calculation utilizing the received plurality of data blocks and the one or more random values to generate intermediate values; performing a data accumulation operation to accumulate random values in calculation of the data blocks; and calculating the authentication tag based at least in part on the generated intermediate values, the accumulated random values, and a received counter value.

In some embodiments, calculation of the authentication tag is performed after processing of all of the plurality of data blocks.

In some embodiments, the method further includes storing the intermediate values in a first register storing the accumulated random values in a second register.

In some embodiments, the method further includes multiplexing between multiple sources in providing the intermediate values for calculation of the authentication tag.

In some embodiments, an apparatus includes means for performing a process for calculation of an authentication tag for a data encryption operation, including generating one or more random values utilizing a pseudo-random number generator; means for receiving a plurality of data blocks for calculation, and performing calculation utilizing the received plurality of data blocks and the one or more random values to generate intermediate values; means for performing a data accumulation operation to accumulate random values in calculation of the data blocks; and means for calculating the authentication tag based at least in part on the generated intermediate values and the accumulated random values.

In some embodiments, the means for calculating the authentication tag is further based on a received counter value.

In some embodiments, calculation of the authentication tag is performed after processing of all of the plurality of data blocks.

In some embodiments, the apparatus further includes means for performing one or more dummy operations between processing of a data block of the plurality of data blocks and performing the data accumulation operation for a random value.

In some embodiments, the apparatus further includes means for storing the intermediate values in a first register and storing the accumulated random values in a second register.

In some embodiments, the apparatus further includes means for multiplexing between multiple sources in providing the intermediate values for calculation of the authentication tag.

In some embodiments, the apparatus further includes means for performing optimization of the calculation of the authentication tag, including performing one or more protective operations to maintain the multiplexing between multiple sources in providing the intermediate values.

In some embodiments, the multiplexing includes implementation of one or more multiplexers that are utilized in calculating a final value for the authentication tag.

In some embodiments, the data encryption operation is an AES-GCM (Advanced Encryption Standard-Galois Counter Mode) encryption operation.

In the description above, for the purposes of explanation, numerous specific details are set forth in order to provide a thorough understanding of the described embodiments. It will be apparent, however, to one skilled in the art that embodiments may be practiced without some of these specific details. In other instances, well-known structures and devices are shown in block diagram form. There may be intermediate structure between illustrated components. The components described or illustrated herein may have additional inputs or outputs that are not illustrated or described.

Various embodiments may include various processes. These processes may be performed by hardware components or may be embodied in computer program or machine-executable instructions, which may be used to cause a general-purpose or special-purpose processor or logic circuits programmed with the instructions to perform the processes. Alternatively, the processes may be performed by a combination of hardware and software.

Portions of various embodiments may be provided as a computer program product, which may include a computer-readable medium having stored thereon computer program instructions, which may be used to program a computer (or other electronic devices) for execution by one or more processors to perform a process according to certain embodiments. The computer-readable medium may include, but is not limited to, magnetic disks, optical disks, read-only memory (ROM), random access memory (RAM), erasable programmable read-only memory (EPROM), electrically-erasable programmable read-only memory (EEPROM), magnetic or optical cards, flash memory, or other type of computer-readable medium suitable for storing electronic instructions. Moreover, embodiments may also be downloaded as a computer program product, wherein the program may be transferred from a remote computer to a requesting computer.

Many of the methods are described in their most basic form, but processes can be added to or deleted from any of the methods and information can be added or subtracted from any of the described messages without departing from the basic scope of the present embodiments. It will be apparent to those skilled in the art that many further modifications and adaptations can be made. The particular embodiments are not provided to limit the concept but to illustrate it. The scope of the embodiments is not to be determined by the specific examples provided above but only by the claims below.

If it is said that an element "A" is coupled to or with element "B," element A may be directly coupled to element B or be indirectly coupled through, for example, element C. When the specification or claims state that a component, feature, structure, process, or characteristic A "causes" a component, feature, structure, process, or characteristic B, it means that "A" is at least a partial cause of "B" but that there may also be at least one other component, feature, structure, process, or characteristic that assists in causing "B." If the specification indicates that a component, feature, structure, process, or characteristic "may", "might", or "could" be included, that particular component, feature, structure, process, or characteristic is not required to be included. If the specification or claim refers to "a" or "an" element, this does not mean there is only one of the described elements.

An embodiment is an implementation or example. Reference in the specification to "an embodiment," "one embodiment," "some embodiments," or "other embodiments" means that a particular feature, structure, or characteristic described in connection with the embodiments is included in at least some embodiments, but not necessarily all embodiments. The various appearances of "an embodiment," "one embodiment," or "some embodiments" are not necessarily all referring to the same embodiments. It should be appreciated that in the foregoing description of exemplary embodiments, various features are sometimes grouped together in a single embodiment, figure, or description thereof for the purpose of streamlining the disclosure and aiding in the understanding of one or more of the various novel aspects. This method of disclosure, however, is not to be interpreted as reflecting an intention that the claimed embodiments requires more features than are expressly recited in each claim. Rather, as the following claims reflect, novel aspects lie in less than all features of a single foregoing disclosed embodiment. Thus, the claims are hereby expressly incorporated into this description, with each claim standing on its own as a separate embodiment.

**Claims**

1.    One or more non-transitory computer-readable storage mediums having stored thereon executable computer program instructions that, when executed by one or more processors, cause the one or more processors to perform operations comprising:

    performing a process for calculation of an authentication tag for a data encryption operation, including:

        generating one or more random values utilizing a pseudo-random number generator;
        receiving a plurality of data blocks for calculation, and performing calculation utilizing the received plurality of data blocks and the one or more random values to generate intermediate values;
        performing a data accumulation operation to accumulate random values in calculation of the data blocks; and
        calculating the authentication tag based at least in part on the generated intermediate values and the accumulated random values.

2.    The one or more storage mediums of claim 1, wherein:

    calculating the authentication tag is further based on a received counter value; and
    calculation of the authentication tag is performed after processing of all of the plurality of data blocks.

3.    The one or more storage mediums of claim 1, further comprising executable computer program instructions that, when executed by one or more processors, cause the one or more processors to perform operations comprising:

    performing one or more dummy operations between processing of a data block of the plurality of data blocks and performing the data accumulation operation for a random value.

4.    The one or more storage mediums of claim 1, further comprising executable computer program instructions that, when executed by one or more processors, cause the one or more processors to perform operations comprising:

    storing the intermediate values in a first register and storing the accumulated random values in a second register.

5.    The one or more storage mediums of claim 1, further comprising executable computer program instructions that, when executed by one or more processors, cause the one or more processors to perform operations comprising:

multiplexing between multiple sources in providing the intermediate values for calculation of the authentication tag.

6. The one or more storage mediums of claim 5, further comprising executable computer program instructions that, when executed by one or more processors, cause the one or more processors to perform operations comprising:

performing optimization of the calculation of the authentication tag, including performing one or more protective operations to maintain the multiplexing between multiple sources in providing the intermediate values.

7. The one or more storage mediums of claim 1, wherein the data encryption operation is an AES-GCM (Advanced Encryption Standard-Galois Counter Mode) encryption operation.

8. A system comprising:

one or more processors including one or more processing cores, the one or more processor to calculate an authentication tag for a data encryption operation; and
a memory for storage of data, including data for one or more secure operations;
wherein the one or more processors are to:

generate one or more random values utilizing a pseudo-random number generator;
receive a plurality of data blocks for calculation, and perform calculation utilizing the received plurality of data blocks and the one or more random values to generate intermediate values;
perform a data accumulation operation to accumulate random values in calculation of the data blocks; and
calculate the authentication tag based at least in part on the generated intermediate values and the accumulated random values.

9. The system of claim 8, wherein:

calculating the authentication tag is further based on a received counter value; and
calculation of the authentication tag is performed after processing of all of the plurality of data blocks.

10. The system of claim 8, wherein the one or more processors are further to:

upon processing a data block, update a state or value for the pseudo-random number generator during one or more clock cycles prior to receiving a next data block.

11. The system of claim 8, further comprising a plurality of registers including at least a first register and a second register, wherein the one or more processors are further to:

store the intermediate values in the first register and store the accumulated random values in the second register.

12. The system of claim 8, further comprising one or more multiplexers to multiplex between multiple sources in providing the intermediate values for calculation of the authentication tag, wherein the one or more multiplexers are utilized in calculating a final value for the authentication tag.

13. A method for calculation of an authentication tag for an AES-GCM (Advanced Encryption Standard-Galois Counter Mode) data encryption operation, including:

generating one or more random values utilizing a pseudo-random number generator;
receiving a plurality of data blocks for calculation, and performing calculation utilizing the received plurality of data blocks and the one or more random values to generate intermediate values;
performing a data accumulation operation to accumulate random values in calculation of the data blocks; and
calculating the authentication tag based at least in part on the generated intermediate values, the accumulated random values, and a received counter value.

14. The method of claim 13, wherein calculation of the authentication tag is performed after processing of all of the plurality of data blocks.

15. The method of claim 13, further comprising:

multiplexing between multiple sources in providing the intermediate values for calculation of the authentication tag.

One-Time Hash-Based Signatures

1 signing key          1 signature          1 verification key

A private key must only sign a single message

## FIG. 1A

Multi-Time Hash-Based Signatures

1 key speed

Key Expansion

Merkle Tree

1 verification key

A private key can sign multiple messages

## FIG. 1B

FIG. 2A

**FIG. 2B**

**Processing Element 300**

**Processing Cores 305**

AES-GCM 310

Authentication Tag (AT) Computation 315

**Side Channel-Attack Countermeasures 330**

Multiplication Countermeasures 332:
Data Randomization

Data and Register Countermeasures 334:
Storage of Randomized Intermediate Results

Implementation Countermeasures 336:
Multiplexing of Sensitive Intermediate Data

**Power/EM Side-Channel Leakage 350**

Algorithm/Multiplication Leakage 352

Data/Register Leakage 354

Implementation/Wire Leakage 356

FIG. 3

MICROARCHITECTURE DPA PROTECTED GCM
TAG COMPUTATION

FIG. 4

R = random

$T_1 = 0$ (Masked Result)

$T_2 = 0$ (Current Mask)

For Each Block X:

$T_1 = (T_1 \wedge (X \wedge R)) * H$

$T_2 = (T_2 \wedge R) * H$

# Update R If Possible Using Transformation/LFSR

Return $T_1 \wedge T_2$

# MULTIPLICATION COUNTERMEASURES FOR
# SCA ON GCM TAG COMPUTATION

~ 500

| Obtain Algorithm for Authentication Tag Calculation | ~ 505 |

| Introduce Random Value(s) for Calculation | ~ 510 |

| Initialize One or More Values at Zero | ~ 515 |

| Receive First Data Block D | ~ 520 |

| Mask Data Values With Random Value and Multiply With Key H | ~ 525 |

| Perform One or More Dummy Calculations With Random Value(s) | ~ 530 |

| Perform Accumulation of Random Values | ~ 535 |

Additional Data Blocks? — ~ 540

No

Yes

| Perform One or More Intermediate Calculations with Random Value(s) | ~ 545 |

| Receive Next Data Block D | ~ 550 |

| Unmask Values and Calculate Authentication Tag | ~ 560 |

FIG. 5

## DATA AND REGISTER COUNTERMEASURES
## FOR SCA ON GCM TAG COMPUTATION

_600_

Implement Tag Calculation Algorithm With
Introduction of Random Values — _605_

Receive Input Data and Perform Calculations For
Generation of the Authentication Tag — _610_

Generate Intermediate Values in Calculation Based
in Part on Random Value(s) — _615_

Store Intermediate Values in Registers — _620_

Additional
Data for
Calculation? — _625_

Yes

No

Complete Calculation of Authentication Tag — _630_

# FIG. 6

## IMPLEMENTATION COUNTERMEASURES FOR SCA ON GCM TAG COMPUTATION

700

| Obtain Algorithm For Calculation of Authentication Tag | 705 |

| Introduce Randomization into Calculation of the Authentication Tag | 710 |

| Implement Calculation Including Intermediate Nodes for Generation of Intermediate Results | 715 |

| Implement Multiplexing of Sources Driving Intermediate Nodes to Avoid Exposing Actual Intermediate Results | 720 |

| Performing Authentication Tag Calculation Utilizing Multiplexing for Intermediate Results | 725 |

# FIG. 7A

## MAINTAINING IMPLEMENTATION COUNTERMEASURES IN CIRCUIT OPTIMIZATION ⌒ 750

```
┌─────────────────────────────────────────┐
│ Commence Process for Circuit Optimization For │ ⌒ 755
│ Calculation of Authentication Tag        │
└─────────────────────────────────────────┘
                    │
                    ▼
┌─────────────────────────────────────────┐
│ Identify Multiplexing of Intermediate Nodes In │ ⌒ 760
│ Circuit Optimization                     │
└─────────────────────────────────────────┘
                    │
                    ▼
┌─────────────────────────────────────────┐
│ Perform Protective Operation(s) to Maintain │ ⌒ 765
│ Multiplexing of Intermediate Nodes In Circuit │
│ Optimization                             │
└─────────────────────────────────────────┘
                    │
                    ▼
┌─────────────────────────────────────────┐
│ Generate Synthesis Directive to Maintain │ ⌒ 770
│ MUXs in the Logic Synthesis:             │
│ Do Not Optimize                          │
└─────────────────────────────────────────┘
                    │
                    ▼
┌─────────────────────────────────────────┐
│ Perform the Circuit Optimization Process Including │ ⌒ 775
│ Protective Operation(s)                  │
└─────────────────────────────────────────┘
                    │
                    ▼
┌─────────────────────────────────────────┐
│ Generate Optimized Circuit Hardware For  │ ⌒ 780
│ Calculation of Authentication Tag        │
└─────────────────────────────────────────┘
```

# FIG. 7B

Processor(s)
802

Memory Device 820

Instructions 821

Data 822

Display Device 811

External Graphics
Processor 812

Data Storage Device
824

Touch Sensors 825

Wireless Transceiver
826

Firmware Interface
828

Cache
804

Register
File
806

Processor Core(s)
807

Instruction Set
809

Memory Controller
816

Graphics Processor(s)
808

Interface Bus(es) 810

Platform
Controller Hub
830

Network
Controller
834

Audio
Controller
846

Legacy I/O
Controller
840

USB Controller(s)
842

Keyboard
Mouse
843

Camera
844

800

FIG. 8

EP 3 972 187 A1

Europäisches
Patentamt

European
Patent Office

Office européen
des brevets

# EUROPEAN SEARCH REPORT

Application Number

EP 21 18 8372

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | VLIEGEN JO ET AL: "Maximizing the throughput of threshold-protected AES-GCM implementations on FPGA", 2017 IEEE 2ND INTERNATIONAL VERIFICATION AND SECURITY WORKSHOP (IVSW), IEEE, 3 July 2017 (2017-07-03), pages 140-145, XP033151878, DOI: 10.1109/IVSW.2017.8031559 [retrieved on 2017-09-11] * abstract, sections I, II, IV, V, figures 1-5 * | 1-15 | INV.<br>H04L9/00<br>H04L9/06<br>H04L9/32 |
| A | EP 2 575 286 A1 (TOSHIBA KK [JP]) 3 April 2013 (2013-04-03) * paragraph [0007] – paragraph [0037]; figures 2,3 * | 1-15 | |

TECHNICAL FIELDS
SEARCHED      (IPC)

H04L

The present search report has been drawn up for all claims

| Place of search | Date of completion of the search | Examiner |
|---|---|---|
| Munich | 14 January 2022 | Spranger, Stephanie |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 18 8372

This annex lists the patent family members relating to the patent documents cited in the above-mentioned European search report.
The members are as contained in the European Patent Office EDP file on
The European Patent Office is in no way liable for these particulars which are merely given for the purpose of information.

14-01-2022

| Patent document cited in search report | | Publication date | Patent family member(s) | | Publication date |
|---|---|---|---|---|---|
| EP 2575286 | A1 | 03-04-2013 | EP | 2575286 A1 | 03-04-2013 |
| | | | JP | 5481455 B2 | 23-04-2014 |
| | | | JP | 2013072950 A | 22-04-2013 |
| | | | US | 2013077790 A1 | 28-03-2013 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SHOR, P.W.** Algorithms for quantum computation: discrete logarithms and factoring. *Proceedings 35th Annual Symposium on Foundations of Computer Science. IEEE Comput. Soc. Press.,* ISBN 0818665807